# EUROPEAN PATENT SPECIFICATION

(11) **EP 0 323 721 B1**
(45) Date of publication and mention of the grant of the patent: **06.10.1993**
(21) Application number: 88311793.9
(22) Date of filing: 13.12.1988
(51) Int. Cl.: C09F 1/04

(54) **Stabilisation of modified rosin**
Stabilisierung eines modifizierten Kolophoniums
Stabilisation d'une colophane modifiée

(30) Priority: 15.12.1987 US 132301
(43) Date of publication of application: 12.07.1989
(73) Proprietor: Union Camp Corporation, Wayne New Jersey 07470 - 2066 (US)
(72) Inventor: Hollis, Samuel D., Savannah Georgia 31406 (US); Johnson, Robert W., Savannah Georgia 31405 (US)
(74) Representative: Lawrence, Peter Robin Broughton

(56) References cited:
- EP-A- 0 194 160
- US-A- 2 407 248
- US-A- 2 447 009
- US-A- 3 277 072

## Description

This invention relates to methods of stabilising modified rosin. More specifically, this invention relates to methods for stabilising rosin which has previously been polymerised.

It is is well known that rosin exists in a number of forms. The term rosin, as used herein, includes tall oil rosin, wood rosin, gum rosin, crude materials and mixtures containing any of the foregoing, and, in general, any materials containing abietic acid, including tall oil fractions containing various proportions of rosin and fatty acids.

A serious problem with rosin is that it undergoes oxidation easily during storage.

To stabilise untreated rosin against oxidation, it is known to convert most of the conjugated rosin acids, as typified by abietic acid, to an isomer without conjugated double bonds such as, for example, dehydroabietic acid. This stabilisation is commonly done by "disproportionation"_{,} a term used in the art to describe displacement of hydrogen atoms in the abietic acid molecule. Rosin can be disproportionated by heating it at elevated temperature in the presence of catalysts. There are numerous disclosures in the literature describing disproportionation treatments of rosin for instance US 3277072 describes the disproportionation of fluid tall oil rosin by heating it with iodine to produce soft products which are stable to oxidation. The use of alternative disproportionating catalysts such as palladium or sulphur dioxide was shown to produce more brittle products. In EP-A-0194160 the use of a three component catalyst system comprising iodine, an iron salt and ammonia for disproportionation of rosins is disclosed. That reference mentions that noble metals such as platinum or palladium, and selenium have also been described as disproportionating agents. It also mentions that resistance to colouring in products comprising rosins has been achieved by treatment of the rosin with sulphur, sulphur halides, alkali metal sulphides, and alkali metal polysulphides. U.S. patents 2,l3O,997, 2,239,555, 2,l38,l83, 2,l54,629, 2,486,l83 and 2,58O,496) teach the use of noble metals such as platinum or palladium. The use of sulfur or selenium is suggested in U.S. 2,5O3,268 and U.S. 2,497,882. U.S. 3,377,334 teaches a combination of disproportionation and bleaching by use of hydroxylated arylsulfides, and U.S. 3,649,6l2 teaches a similar process using aryl thiols. U.S. 4,265,8O7 discloses a method of disproportionating rosin using a dithiin derivative.

The rosin that is treated in these prior art disclosures is always monomeric rosin.

It is also known to produce polymerised rosins. The polymerisation of rosin involves dimerization of constituent rosin acids, such as abietic and isopimaric acids, and other rosin acids which are their double bond isomers, and is described in Berry and Lawrence, "Influence of Reaction Conditions on the Dimerization of Abietic Acid and Rosin", I&EC Product Research and Development, Vol.9, page 6O, March l97O, the disclosure of which is hereby incorporated by reference.

Advantages of polymerised rosins compared to unmodified rosins are their relatively higher melting points and their relatively lower tendencies to crystallise or oxidise.

The polymerised rosin does, sometimes, have a softening point that is sufficiently low that the rosin cannot conveniently be supplied in flake form. It is therefore common to strip lower melting components from the rosin so as to raise the softening point of the polymerised rosin. This stripping is usually effected by distillation. Typically the softening point is raised to at least 9O°C, and often higher.

Despite the polymerisation and stripping, it is commonly accepted that the polymerised and stripped rosin is liable to be oxidised upon storage, due to oxidation. Despite the obvious undesirability of this, it seems to have been accepted as being inevitable. Thus it is accepted that polymerised rosin in flaked form is susceptible to oxidation to such an extent that it usually has a storage life of not more than a few months after which it becomes so oxidised that it does not perform correctly in many formulated or processed products. Oxidised polymer-rosin will darken excessively if used as a component in an alkyd cook where it is to be esterified with polyols. It will also precipitate out, or cause excessive haze and other defects, when it is merely blended in as a physical mixture in solvent born or hot melt adhesives.

In US-A-2447009 Hampton describes the use of iodoform to bleach colour bodies in polymerised rosin. In US-A-2407248 Borglin describes the dehydrogenation of polymerised rosin by treatment with sulphur to increase the stability as measured by the bromine number of the product.

In the invention we now provide a stabilised polymerised rosin which, when placed in a pure oxygen atmosphere of 2lkg/cm² for fourteen days at 25°C, absorbs no more than O.4% by weight oxygen.

A process according to the invention for producing a stabilised polymerised rosin is characterised in that polymerised rosin that has a ring and ball softening point of at least 90°C is heated to a temperature in the range 200 to 300°C for a period in the range 1 to 4 hours in the presence of an agent, characterised in that the agent is a disproportionating agent selected from iodine, noble metals, hydroxylated arylsulfides, aryl thiols and dithiin derivatives. The polymerised rosin that is heated in this manner will generally have a ring and ball softening point of at least 110, usually at least 120 and preferably at least 130°C.

The desired softening point may have been achieved in any known manner, for instance by distilling or otherwise removing monomeric or other low softening materials from polymerised rosin to an extent such that the product has the desired softening point. Thus the overall process of the invention may comprise the preliminary step of distilling monomeric and/or other low softening point material from polymerised rosin having a ring and ball softening point lower than is desired until the distilled and polymerised rosin has the desired softening point.

The heating in the presence of a disproportionating agent is effected by contacting it at elevated temperatures with an effective amount of one or more disproportionating agents. The optimum conditions for any particular product will depend upon the materials being used but generally a temperature within the range of 200 to 300°C and a time of about one to four hours will generally suffice.

It is desired that the resulting modified rosin has an abietic acid content of less than 5.0%, preferably less than 1.0% by weight. Another way of measuring the structural rearrangement of the rosin is by its ability to absorb oxygen. As stated, the process according to this invention, allows the production of modified rosin which, when placed in a pure oxygen atmosphere of 300psi for fourteen days at 25°C, will absorb no more than O.4% by weight oxygen.

Any of the claimed types of disproportionating agents which have been used for the treatment of non polymerised rosin may be used in the invention, and reference should be made to the above-mentioned patents.

Examples of preferred disproportionating agents include iodine, amylphenol disulphide, selenium, l,l,-thiobis-(2-naphthol), and 2,4-dihydroxythiophenol.

Disproportionation is a catalytic reaction, and only catalytic quantities of the disproportionating agents are therefore required.

### Examples l, 2 and 3

Commercial polymerised rosin which has been stripped to l4O°C ring and ball softening point was melted under inert gas and then heated to 28O°C after adding O.2% of the disproportionating agents listed in the table below. the batches were held for two hours, then cooled and discharged into pans. One gram samples of the modified rosin polymers were placed in a pure oxygen atmosphere of 3OOpsi for fourteen days at 25°C, then re-weighed for weight gain. The increase in weight observed (oxygen absorption) in this test is enumerated in the table below along with the observed colour of the treated rosin polymer after the treatment measured using the Gardner Test (ASTM Method D l544). Example l is a comparative example which was given no treatment.

| | Example | | |
|---|---|---|---|
| | l | 2 | 3 |
| Polymerised Rosin (pbw) | lOO | lOO | lOO |
| Amylphenol Disulphide (pbw) | - | O.2 | - |
| Iodine (pbw) | - | - | O.2 |
| Colour 5O% in Toluene (Gardner) | ll | 8 | 7 |
| Oxygen Absorption (%) | O.7 | O.2 | less than O.3 |

## Claims

1. A process for stabilising a polymerised rosin which comprises heating at a temperature in the range of from 200 to 300°C for a period in the range 1 to 4 hours a polymerised rosin that has a ring and ball softening point of at least 90°C in the presence of an agent, characterised in that the agent is a disproportionating agent selected from iodine, noble metals, hydroxylated arylsulfides, aryl thiols and dithiin derivatives.

2. A process according to claim 1 wherein the disproportionating agent is selected from iodine, amylphenol disulphide, 1,1-thiobis-(2-naphthol), and 2,4-dihydroxythiophenol.

3. A process according to claim 1 or claim 2 wherein the polymerised rosin has a ring and ball softening point of at least 130°C.

4. A process according to any preceding claim wherein the polymerised rosin that is heated is made by the preliminary step of distilling lower softening point components from a polymerised rosin having a ring and ball softening point lower than the desired value until the distilled polymerised rosin has a ring and ball softening point of at least 90°C.

5. A process according to any preceding claim in which the stabilised polymerised rosin is characterised in that, when placed in a pure oxygen atmosphere of 21kg/cm² for 14 days at 25°C, it absorbs no more than 0.4% by weight oxygen.

6. A process according to any preceding claim in which the stabilised polymerised rosin product has an abietic acid content of less than 1%.

## Patentansprüche

1. Verfahren zur Stabilisierung eines polymerisierten Kolophoniums, das umfasst, ein polymerisiertes Kolophonium bei einer Temperatur in einem Bereich von 200 bis 300°C für eine Zeitdauer in einem Bereich von 1 bis 4 Stunden in der Gegenwart eines Wirkstoffes zu erhitzen, wobei das polymerisierte Kolophonium einen Ring-und-Kugel-Erweichungspunkt von wenigstens 90°C hat, dadurch gekennzeichnet, dass der Wirkstoff ein disproportionierender Wirkstoff ist, der von Jod, Edelmetallen, hydroxylierten Arylsulfiden, Arylthiolen und Biophenderivaten ausgewählt wird.

2. Verfahren nach Anspruch 1, in dem der disproportionierende Wirkstoff von Jod, Amylphenoldisulfid, 1,1-Thiobis-(2-naphthol), und 2,4-Dihydroxythiophenol ausgewählt wird.

3. Verfahren nach Anspruch 1 oder Anspruch 2, in dem das polymerisierte Kolophonium einen Ring-und-Kugel-Erweichungspunkt von wenigstens 130°C hat.

4. Verfahren nach einem der vorhergehenden Ansprüche, in dem das polymerisierte Kolophonium, das erhitzt wird, mittels des einleitenden Schrittes der Destillation von Komponenten mit geringeren Erweichungspunkten aus einem polymerisierten Kolophonium mit einem Ring-und-Kugel-Erweichungspunkt, der geringer als der gewünschte Wert ist, hergestellt wird, bis das destillierte polymerisierte Kolophonium einen Ring-und-Kugel-Erweichungspunkt von wenigstens 90° hat.

5. Verfahren nach einem der vorhergehenden Ansprüche, in dem das stabilisierte polymerisierte Kolophonium dadurch gekennzeichnet ist, dass es nicht mehr als 0,4 Gewichtsprozent Sauerstoff absorbiert, wenn es in eine reine Sauerstoffatmosphäre von 21kg/cm² für 14 Tage bei 25°C gebracht wird.

6. Verfahren nach einem der vorhergehenden Ansprüche, in dem das stabilisierte polymerisierte Kolophoniumprodukt eine Abietinsäuregehalt von weniger als 1% hat.

## Revendications

1. Procédé de stabilisation d'une colophane polymérisée qui comprend le chauffage à une température comprise dans une gamme de 200 à 300°C pendant une période comprise dans une gamme de 1 à 4 h d'une colophane polymérisée, qui a un point de ramollissement déterminé par la méthode bille et anneau d'au moins 90°C, en présence d'un agent, caractérisé en ce que l'agent est un agent de disproportionation choisi parmi les suivants : iode, métaux nobles, sulfures d'aryles hydroxylés, arylthiols et dérivés de dithiine.

2. Procédé selon la revendication 1, dans lequel l'agent de disproportionation est choisi parmi les suivants : iode, bisulfure d'amylphénol, 1,1-thiobis-(2-naphtol) et 2,4-dihydroxythiophénol.

3. Procédé selon la revendication 1 ou la revendication 2, dans lequel la colophane polymérisée a un point de ramollissement déterminé par la méthode bille et anneau d'au moins 130°C.

4. Procédé selon l'une quelconque des revendications précédentes, dans lequel la colophane polymérisée qui est chauffée est fabriquée au cours de l'étape préliminaire de séparation par distillation de composés à point de ramollissement inférieur d'une colophane polymérisée ayant un point de ramollissement déterminé par la méthode bille et anneau qui est inférieur à la valeur souhaitée, jusqu'à ce que la colophane polymérisée distillée ait un point de ramollissement déterminé par la méthode bille et anneau d'au moins 90°C.

5. Procédé selon l'une quelconque des revendications précédentes, dans lequel la colophane polymérisée stabilisée est caractérisée en ce que, quand on la place dans une atmosphère d'oxygène pure de 21 kg/cm² pendant 14 jours à 25°C, elle n'absorbe pas plus de 0,4 % en poids d'oxygène.

6. Procédé selon l'une quelconque des revendications précédentes, dans lequel le produit constitué de colophane polymérisée stabilisée a une teneur en acide abiétique inférieure à 1 %.
